# EUROPÄISCHE PATENTSCHRIFT

(11) **EP 0 455 152 B1**
(45) Veröffentlichungstag und Bekanntmachung des Hinweises auf die Patenterteilung: **22.02.1995**
(21) Anmeldenummer: 91106765.0
(22) Anmeldetag: 26.04.1991
(51) Int. Cl.: B01D 53/02

(54) **Verfahren zur Reinigung von Abgasen**
Process for the purification of exhaust gases
Procédé pour la purification des effluents gazeux

(30) Priorität: 28.04.1990 DE 4013768
(43) Veröffentlichungstag der Anmeldung: 06.11.1991
(73) Patentinhaber: DEUTSCHE BABCOCK ANLAGEN GMBH, 46003 Oberhausen (DE)
(72) Erfinder: Horch, Klaus, Dr., W-4152 Kempen (DE); Weirich, Walter, Dr., W-4150 Krefeld (DE)
(74) Vertreter: Frese-Göddeke, Beate, Dr.

(56) Entgegenhaltungen:
- DE-A- 2 829 703
- DE-A- 3 843 313
- DE-A- 3 919 124
- US-A- 4 374 654

## Beschreibung

Gegenstand der Erfindung ist ein Verfahren zur Reinigung von Abgasen gemäß dem Oberbegriff des Anspruchs 1.

Das Problem der sicheren Entfernung von Produkten unvollständiger Verbrennung, sogenannte PIC (Products of Incomplete Combustion), stellt sich bei der Reinigung von Rauchgasen der Müllverbrennungsanlagen, Sondermüllverbrennungsanlagen oder Kraftwerke, aber auch von Abgasen der Aufbereitung von Altlasten oder von Klärschlämmen.

Es handelt sich bei den PIC u.a. um Dioxine, Furane und deren Vorläufer, die zum Teil sehr toxisch sind und auch nicht in geringen Mengen emittiert werden dürfen.

Zur Verhinderung der Emission von PIC werden Maßnahmen angewandt, die die Entstehung von PIC verhindern oder die die entstandenen PIC wieder abbauen. Derartige Maßnahmen sind z.B. die Verbesserung des Ausbrandes oder, wie aus der EP-A1-0 252 521 bekannt, der Abbau der PIC in Gegenwart eines Katalysators bei Temperaturen zwischen 150 bis 800 °C.

Ein Abbau von aus dem Abgas durch Anlagerung an die Flugasche entfernten PIC kann, wie z.B. in der EP-A1 0 280 364 beschrieben, außerhalb des Reinigungsprozesses stattfinden. Eine entsprechende Einrichtung zur Zerstörung der PIC in der Flugasche ist aus der DE-OS 37 03 984 bekannt.

Als weitere Maßnahme zur Verhinderung der Emission von PIC ist es bekannt, zusätzlich zu einer üblichen Abgasreinigung zur Entfernung von z.B. Staub, HCl, HF, SO₂ und ggf. NOₓ eine Adsorption der PIC an einem geeigneten Adsorptionsmittel durchzuführen.

Bei dem von J. Bewerunge, G. Ritter (GVC-Tagung 4.-6.12.89, Baden-Baden) beschriebenen Verfahren findet diese Adsorption in einer zusätzlichen Filterstufe statt. Die aus einem Adsorberbett aus Braunkohlenkoks bestehende Filterstufe wird z.B. vor einer Entstickung angeordnet und bei Temperaturen von bis zu 150 °C betrieben. Bei vorgeschalteter Naßwäsche des Abgases kann der gesamte Braunkohlenkoks in der Feuerung entsorgt werden.

Wesentlicher Nachteil der Verwendung von Braunkohlenkoks ist die Gefahr der Selbstanzündung und des Schwelbrandes. Ein weiterer Nachteil dieses Verfahrens ist, daß mit toxischen PIC beladener Braunkohlenkoks von der Filterstufe zur Feuerung der Anlage transportiert werden muß.

Aus der DE-PS 34 26 059 ist eine Adsorption von PIC an Aktivkoks oder Aktivkohle bekannt. Die Adsorption wird ebenfalls in einem Filterbett durchgeführt. Zur Aufarbeitung des beladenen Adsorptionsmittels, wird es in einen Desorber transportiert. Dort wird mittels eines auf über 1000 °C aufgeheizten Desorptionsgases eine Desorption und thermische Zersetzung der PIC durchgeführt.

Auch bei der Verwendung von Aktivkoks oder Aktivkohle gemäß diesem Verfahren besteht Brandgefahr, und zwar sowohl im Adsorber als auch im Desorber. Außerdem ist die Aufarbeitung der PIC mittels eines auf so hohe Temperaturen aufgeheizten Desorptionsgases sehr aufwendig.

Bei einem in der DE-OS 39 19 124 beschriebenen, gattungsbildenden Verfahren wird eine Adsorption/Filtration zur Abscheidung von PIC (d.h. polyzyklischen Kohlenwasserstoffen, z.B. Dioxinen und Furanen) aus Abgasen von Abfallverbrennungsanlagen durchgeführt, indem die von Staub, HCl, HF, SO₂, NOₓ und Schwermetallen vorgereinigten Abgase zuerst in einem Reaktor mit feinverteiltem Adsorptionsmittel vermischt werden und anschließend zu einem filternden Abscheider geführt werden. Das im Filter abgeschiedene Adsorptionsmittelgemisch wird im Kreislauf geführt und nur geringfügig durch frisches Additiv ersetzt. Die vom Rezirkulationskreislauf ausgeschleuste Teilmenge wird zur thermischen Zersetzung der PIC zu der Verbrennungsanlage geführt.

Auch bei diesem Verfahren wird das mit toxischen PIC beladene Adsorptionsmittel zu der Verbrennungsanlage über eine größere Strecke transportiert und bildet daher ein Sicherheitsrisiko.

Als Adsorptionsmittel können Stoffe mit einer hohen Selektivität (z.B. Aktivkohle, Molekularsiebe, Natriumsulfid, Kalkhydrat) eingesetzt werden.

Es sind jedoch nicht alle selektiv wirkenden Adsorptionsmittel mit einer hohen spezifischen Oberfläche gleichgut geeignet, die PIC durch Adsorption/Filtration aus vorgereinigtem Abgas zu entfernen.

Bei der Verwendung von Aktivkohle, die ein sehr gutes Adsorptionsvermögen speziell für PIC hat, muß immer eine gewisse Brandgefahr in Kauf genommen werden. Pulverförmige Kohle führt darüberhinaus beim Einsatz in Gewebefiltern zu Verstopfungsproblemen.

Dagegen hat die Verwendung von Kalkhydrat den Nachteil eines geringen Adsorptionsvermögens für die PIC. Die Probleme dieser Adsorptionsmittel haben dazu geführt, die Verwendung von Mischungen vorzuschlagen. Aus der WO 89/11329 ist bekannt, Kalkhydrat zusammen mit oberflächenaktiven Stoffen, wie Aktivkohle, einzusetzen.

Die Nachteile solcher Mischungen sind:
- ein großer Herstellungsaufwand, wie z.B. in der WO 89/11329 beschrieben,
- schwierige Aufarbeitung des Adsorptionsmittels und
- geringe Wiederverwertungsmöglichkeit.

Die Erfindung hat sich daher die Aufgabe gestellt, bei einem Verfahren gemäß dem Oberbegriff des Anspruchs 1 ein möglichst gut verfügbares Adsorptionsmittel zu finden und einzusetzen, mit dem die PIC, insbesondere Dioxine und Furane, möglichst vollständig und sicher entfernt werden.

Das Kennzeichen des Anspruchs 1 löst diese Aufgabe.

Zeolithe sind aus kristallinen Alumosilikaten, bestehend aus 4-wertigen Siliziumatomen und 3-wertigen Aluminiumatomen aufgebaut, die in ein Sauerstoffanionengitter eingebunden sind. Zur Neutralisation der Ladungsunterschiede zwischen Silizium und Aluminium sind Kationen (K⁺, Na⁺, Ca2⁺, NH₄⁺, u.a.) im Kristallgitter eingebunden.

In den Zeolithen liegen Polyeder, Schichten oder Ketten aus eckenverknüpften AlO₄- und SiO₄-Tetraedern vor, die zu einem porenreichen, von langen Kanälen durchzogenen Raumnetzwerk verbunden sind. Im Innern befinden sich die Alkali- bzw. Erdalkali-Ionen. Die Kanäle bilden Hohlräume, sogenannte aktive Zentren, mit effektiven Öffnungen, den sogenannten Porenöffnungen, die je nach Strukturtyp und eingesetzten Kationen feste Werte zwischen 0,3 und 1,1nm (3 und 11 Å) aufweisen.

Über diese Öffnungen sind die Hohlräume miteinander verbunden und können nur von Molekülen passender Größe und Gestalt passiert werden, was z.B. eine Trennung verschieden großer Moleküle ermöglicht. Für das Eindringen ist der gaskinetische Durchmesser der Moleküle maßgebend. Er darf nicht größer sein als die Porenöffnung der speziellen Zeolithe. Er darf auch nicht wesentlich kleiner sein als die Porenöffnung, weil sonst keine Adsorption stattfindet.

Der Einsatz von Zeolithen als Adsorptionsmittel oder als Trennmittel verschieden großer Moleküle ist z.B. aus der Zeitschrift "Chemie in unserer Zeit", 4/86, S. 117 bis 127 bekannt. In der DE-OS 39 19 124 ist der Einsatz von Molekularsieben, zu denen neben z.B. aus der DE-PS 21 19 829 bekannten, kohlenstoffhaltigen Molekularsieben oder anderen Silikaten auch Zeolithe gehören, zur Befreiung von vorgereinigtem Abgas von polyzyklischen Kohlenwasserstoffen genannt.

Die Kenntnisse über Zeolithe legten jedoch gemäß folgender Überlegungen nahe, daß diese nicht besonders gut zur Entfernung von PIC aus Abgasen z.B. einer Müllverbrennungsanlage, die bereits einer Rauchgaswäsche unterzogen worden sind, geeignet sind.

Da im vorgereinigten Abgas ein hoher Überschuß von Wasser-, Sauerstoff- und Stickstoffmolekülen in Konzentrationen von 5 bis 80 Vol-% mit entsprechend kleinem gaskinetischen Durchmesser (vgl. Taschenbuch für Chemiker und Physiker Band II, 1970, S. 3 - 260 bis 3 - 266) vorhanden ist und die Zeolithe eine hohe Adsorptionsfähigkeit für diese Moleküle, insbesondere für Wassermoleküle (vgl. Ullmann, Band 17, S. 16), besitzen, mußte man annehmen, daß die aktiven Zentren der Zeolithe durch diese Moleküle völlig blockiert sind. Eine gute Adsorptionsfähigkeit für die in wesentlich geringeren Konzentrationen von 10 ⁻⁴ bis 10 ⁻⁸ Vol-% vorhandenen PIC war daher nicht zu erwarten.

Für Zeolithe mit einer kleineren Porenöffnung mußte man eine Adsorptionsfähigkeit für Dioxine und Furane sogar ausschließen. Der gaskinetische Durchmesser der Dioxine und Furane ist zwar nicht genau bekannt, läßt sich aber aufgrund ähnlicher Molekülstrukturen abschätzen. Danach müßten geeignete Zeolithe eine Porenöffnung größer 0,7nm (7 Å) (Benzol: 0,7nm (7,0 Å), bei etwa 100 °C, Taschenbuch, S. 3-264, s.a. Tabelle 4, Ullmann, Band 17, S. 16) oder sogar größer 0,74nm (7,4 Å) (Toluol: 0.74nm (7,4 Å), bei ca. 100 °C, Taschenbuch, S. 3-264) aufweisen.

Die Porenöffnung der Zeolithe des Strukturtyps A beträgt je nach Kation 0,3 bis 0,5nm (3 bis 5 Å), bei Na⁺ 0,41nm (4,1 Å). Zeolithe des Strukturtyps A dürften keine Adsorptionswirkung auf die toxischen PIC, wie Dioxine und Furane, haben.

Überraschenderweise lassen sich jedoch mit diesen Zeolithen die toxischen PIC, gemessen in TE (toxischen Einheiten), im Abgas um 99 % reduzieren, und zwar auch, wenn das Abgas einen hohen Wasseranteil aufweist. Der Mechanismus, durch den trotz der zu erwartenden Beladung der aktiven Zentren mit den im Überschuß im Abgas enthaltenen Molekülen und trotz der zu kleinen Porenöffnung die toxischen PIC aus dem Abgas entfernt werden, ist bisher nicht genau bekannt. Eine mögliche Erklärung besteht darin, daß eine Dechlorierung der Dioxine stattfindet, die wahrscheinlich mit einer Zerstörung der Zeolithstruktur verbunden ist.

Ein Vorteil der Verwendung von Zeolithen wäre dann, daß durch die Dechlorierung eine, zumindest teilweise, Zerstörung der toxischen PIC stattfindet. Die aus dem Adsorptionsprozeß abgezogenen Zeolithe wären nicht mehr mit toxischen PIC beladen, so daß keine weitere Aufarbeitung mehr nötig wäre; zumindest wäre ihre Beladung geringer als beim Einsatz anderer Adsorptionsmittel.

Der Einsatz von Zeolithen bietet bei der Entfernung von PIC außerdem den Vorteil, daß keine Gefahr der Selbstentzündung und eines Schwelbrandes im Adsorber mehr besteht.

Ein weiterer Vorteil der Zeolithe ist, daß sie je nach Verfahrensführung der Reinigungsanlage im Temperaturbereich von 70 bis 200 °C eingesetzt werden können.

Die erfindungsgemäßen Zeolithe weisen eine spezifische Oberfläche von 700 bis 1500 m²/g auf, die zur möglichst vollständigen Entfernung der PIC sowohl bei nur geringen Mengen im Abgas als auch bei kurzzeitigem Anstieg ihrer Menge, z.B. durch Betriebsstörungen, beiträgt. Dadurch wird die Betriebssicherheit zusätzlich erhöht.

Diese Zeolithe reduzieren auch die noch im Abgas befindlichen Metalle, wie Hg, Cd, Pb, Zn, Cu, Salze und andere Produkte aus dem Reinigungsprozeß.

Bei den erfindungsgemäß eingesetzten Zeolithen des Strukturtyps A handelt es sich um handelsübliche Zeolithe. Sie sind daher gut verfügbar.

Bei den in Anspruch 2 beschriebenen Zeolithen des Strukturtyps A mit Na⁺ als Kation handelt es sich um übliche, günstig zu erwerbende Waschmittelzeolithe. Dadurch sind die Betriebskosten beim Einsatz dieser Zeolithe besonders gering.

Durch den Austausch der Kationen durch Silber bei einem Teil der Zeolithe gemäß Anspruch 3 wird die Adsorption von Quecksilber durch Amalganbildung weiter verbessert.

Vorteil des Anspruchs 4 ist, daß die Adsorption bei höheren Temperaturen durchgeführt werden kann und die Zeolithe in konfigurierter Form einfacher zu handhaben sind.

Vorteil des Anspruchs 5 ist, daß bei Adsorption in einem Gewebefilter durch eine Regulierung der zugeführten Menge des Adsorptionsmittel und der Schichtdicke eine einfache Anpassung an verschiedene Gehalte von PIC im Abgas möglich ist. Dabei wird dem Abgas pro m³ 30 bis 700 mg Zeolithe mit einem Korndurchmesser von 1 bis 100 »m zugeführt. Eine besonders gute Filterschicht baut sich bei Zeolithen mit einem Korndurchmesser von 5 bis 20 »m auf.

Vorteil des Anspruchs 6 ist, daß die beladenen Zeolithen sicher aufgearbeitet werden. Bei einer Temperatur von 250 bis 500 °C und Luftabschluß findet eine Desorption der an den Zeolithen adsorbierten Schadstoffe und gleichzeitig eine vollständige thermische Zersetzung der PIC statt. Auch bei diesen zur Aufarbeitung notwendigen höheren Temperaturen besteht beim Einsatz von Zeolithen keine Brandgefahr.

Die Aufarbeitung der Zeolithe vermeidet außerdem das Sicherheitsrisiko, das mit einem Transport eines mit toxischen PIC beladenen Adsorptionsmittels zurück zu einem Feuerraum verbunden ist, die in der DE-OS 39 19 124 beschrieben.

Vorteil des Anspruchs 7 ist, daß durch die Zuführung eines sauerstoffarmen Gases die Desorption der an den Zeolithen adsorbierten Schadstoffen beschleunigt wird und damit die Aufarbeitung schneller durchzuführen ist.

Vorteil des Anspruchs 8 ist eine bessere Ausnutzung der Zeolithe durch direkte Rückführung eines Teils der Zeolithe.

Bei einem Verfahren gemäß Anspruch 9 wird ein Teil der beladenen Zeolithe abgezogen, d.h. aus dem Kreislauf entfernt. Dies ist eine vorteilhafte Senke für die ebenfalls in den beladenen Zeolithen angelagerten restlichen Schadstoffe, wie Schwermetalle, Salze und andere Produkte aus dem vorangegangenen Reinigungsprozeß. Das Verfahren nach Anspruch 9 wäre besonders vorteilhaft, wenn bei der Adsorption der PIC an den Zeolithen eine Zerstörung der toxischen PIC stattfindet.

Werden die Zeolithe gemäß Anspruch 10 erst nach der Aufarbeitung zur Bildung einer Senke aus dem Kreislauf entfernt, so sind sie einfacher zu entsorgen. Sie können z.B. zusammen mit der eventuell schon vorbehandelten Flugasche weiterverarbeitet werden.

Anspruch 11 ist bei Reinigungsanlagen, bei denen das Abgas aus einem Feuerraum mit daran anschließenden Abgaskanälen stammt, von Vorteil.

Anspruch 12 ist bei Reinigungsanlagen von Vorteil, bei denen keine Rückführung in einen Feuerraum oder in Abgaskanäle möglich ist.

Die Erfindung soll anhand von Beispielen, die in der Zeichnung schematisch dargestellt sind, weiter erläutert werden.

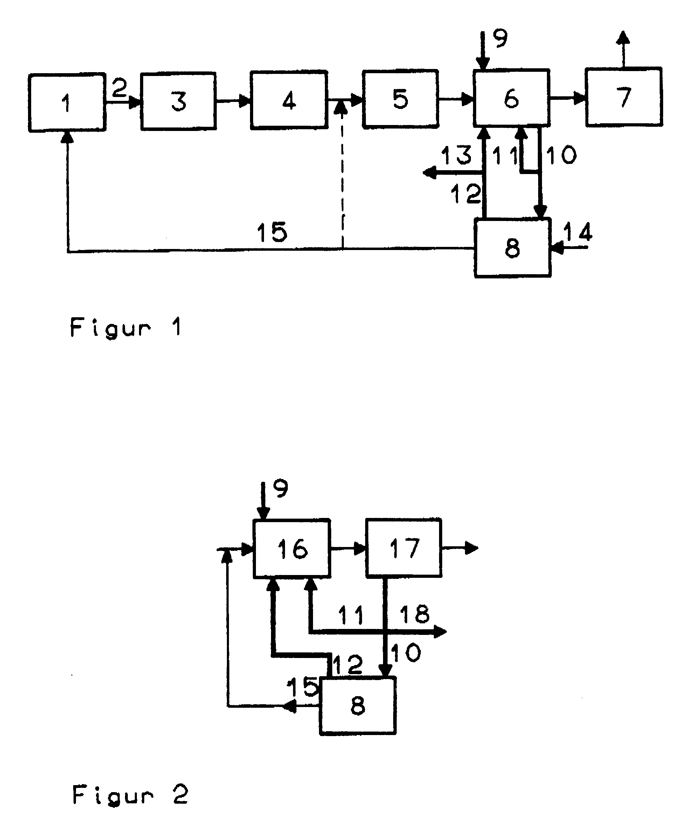

Figur 1 zeigt eine Anlage zur Reinigung von Abgas mit einem Zeolith-Adsorber eines ersten Beispiels und Figur 2 eine weitere Ausführungsform von Zeolith-Adsorber und Vorrichtung zur Aufarbeitung der Zeolithe einer Anlage eines zweiten Beispiels.

### Beispiel 1:

Eine in Figur 1 dargestellte Anlage zur Reinigung von Abgasen nach einem Naßverfahren einer Müllverbrennungsanlage 1 weist folgende hintereinandergeschaltete und durch Abgaskanäle 2 verbundene Vorrichtungen auf: einen Entstauber 3, einen zweistufigen Wäscher 4 zur Entfernung von HCl, HF und SO₂, einen Katalysator 5 zur Entfernung von NOₓ, einen Zeolith-Adsorber, der ein Filter 6 mit einer Schüttschicht aus Zeolithen aufweist, und einen Kamin 7. Außerdem weist die Anlage eine Vorrichtung 8 zur Aufarbeitung der Zeolithe auf.

Am Filter 6 sind eine Zufuhrleitung 9 für frische Zeolithe, eine Abfuhrleitung 10 für beladene Zeolithe, eine von der Abfuhrleitung 10 abzweigende Zufuhrleitung 11 für direkt zurückgeführte, beladene Zeolithe und eine Zufuhrleitung 12 für aufgearbeitete Zeolithe angeschlossen.

Die Abfuhrleitung 10 für beladene Zeolithe und die Zufuhrleitung 12 für aufgearbeitete Zeolithe sind an der Vorrichtung 8 zur Aufarbeitung der Zeolithe angeschlossen. Von der Zufuhrleitung 12 zweigt eine Leitung 13 zum Abziehen von aufgearbeiteten Zeolithen ab. Außerdem mündet in der Vorrichtung 8 eine Zufuhrleitung 14 für sauerstoffarmes Gas. Ausgehend von der Vorrichtung 8 führt eine Abgasleitung 15 zum Feuerraum der Müllverbrennungsanlage 1.

Die Schüttschicht aus Zeolithen im Filter 6 weist eine Dicke von 0,5 bis 2 m auf und besteht aus einem Granulat eines Korndurchmessers von 1 bis 3 mm. Die spezifische Oberfläche der eingesetzten Zeolithe beträgt 700 bis 1500 m²/g. In diesem Beispiel werden Zeolithe des Strukturtyps A mit Na⁺ als Kation, d.h. mit einer Porenöffnung von 0,41nm (4,1 Å), eingesetzt.

Die Vorrichtung 8 zur Aufarbeitung der Zeolithe weist eine direkt beheizbare Drehtrommel auf.

Im Betrieb durchströmt das Abgas zunächst den Entstauber 3, in dem der Flugstaub entfernt wird, anschließend den zweistufigen Wäscher 4, in dem in der ersten Stufe HCl und HF und in der zweiten Stufe SO₂ aus dem Abgas gewaschen wird, dann den Katalysator 5, in dem nach Aufwärmung des Rauchgases und Eindüsung von Ammoniak NOₓ entfernt wird, schließlich das Filter 6 und verläßt die Anlage durch den Kamin 7.

Im Filter 6 durchströmt das Abgas die Schüttschicht aus Zeolithen bei einer Temperatur von 80 bis 200 °C, insbesondere von 120 bis 200 °C. Die Zeolithe adsorbieren die i.a. in geringen Mengen im gereinigten Abgas vorhandenen PIC. Bei einer Eingangskonzentration der PIC von 5,4 ngTE/Nm³ wurden nach der Adsorption Reingaswerte von 0,007 ngTE/Nm³ gemessen. Dies entspricht einer Abscheidung von > 99,8 %. Das große Adsorptionsvermögen der Zeolithe gewährleistet auch eine weitgehend vollständige Adsorption der PIC, wenn ihre Menge im Abgas durch eine Betriebsstörung erhöht ist.

Bei der Adsorption findet vermutlich eine Dechlorierung der Dioxine und ähnl. PIC statt. Die toxischen PIC werden zerstört, gleichzeitig findet eine Zerstörung der Zeolithstruktur statt.

Außerdem adsorbieren die Zeolithe restliche Salze und andere Produkte aus den vorangegangenen Reinigungsstufen, aber auch, wenn vorhanden, Quecksilber, HCl, HF, SO₂, insbesondere staubförmige und gasförmige Metalle.

20 bis 100 % der beladenen Zeolithe werden durch die Abfuhrleitung 10 in die Vorrichtung 8 zur Aufarbeitung der Zeolithe geführt und dort unter Luftabschluß von einem durch die Zufuhrleitung 14 eingeleiteten, sauerstoffarmen, heißen Gas, z.B. Dampf oder Inertgas, durchströmt, wodurch eine Temperatur von 250 bis 500 °C eingestellt wird. Dabei findet eine Desorption der an den Zeolithen angelagerten Schadstoffe statt und gleichzeitig eine Zersetzung der PIC.

Der Rest der beladenen Zeolithe wird zur besseren Ausnutzung der Zeolithe durch die Zufuhrleitung 11 direkt in das Filter 6 zurückgeführt.

5 bis 50 % der aufgearbeiteten Zeolithe werden abgezogen, d.h. durch die Leitung 13 aus der Anlage ausgeschleust und z.B. deponiert. Sie dienen als Senke für die in den Zeolithen ebenfalls angelagerten restlichen Schadstoffe, wie Schwermetalle, Salze und andere Produkte aus dem Reinigungsprozeß. Der Rest der aufgearbeiteten Zeolithe wird durch die Zufuhrleitung 12 in das Filter 6 zurückgeführt.

Das Abgas der Vorrichtung 8 zur Aufarbeitung der Zeolithe wird über die Abgasleitung 15 in den Feuerraum der Müllverbrennungsanlage 1 zurückgeleitet.

Die abgezogenen Zeolithe können auch zur vollständigen Inertisierung des Adsorptionsmittels in den Feuerraum zurückgeführt werden.

Das Abgas der Vorrichtung 8 kann auch direkt in einen der Abgaskanäle 2, z.B. vor dem Wäscher 4 oder vor dem Katalysator 5, zurückgeleitet werden, wie dies durch eine gestrichelt gezeichnete Abgasleitung 15 in Figur 1 angedeutet ist.

Statt des Katalysators könnte die Anlage auch mit einer anderen Vorrichtung zur Entfernung von NOₓ, wie z.B. einem speziellen Aktivkohlefilter, ausgestattet sein. Der Zeolith-Adsorber (und zwar sowohl der Zeolith-Adsorber dieses Beispiels 1 als auch der des Beispiels 2) könnte auch hinter einer Anlage zur Reinigung des Abgases nach einem Trocken- oder Quasitrockenverfahren angeordnet sein.

Bei einer Variante dieses Beispiels, ist nach dem Wäscher 4 zunächst eine Aufwärmvorrichtung und anschließend der durch das Filter 6 gebildete Zeolith-Adsorber vor dem Katalysator 5 und dem Kamin 7 angeordnet. Im Betrieb wird dabei das den Wäscher 4 verlassende Abgas zunächst um 5 bis 60 °C aufgewärmt, bevor es in das Filter 6 zur Adsorption der PIC geleitet wird.

### Beispiel 2: (kein Beispiel zur Erläuterung des erfindungsgemäßen Verfahrens)

Die Anlage des Beispiels 2 weist im Unterschied zu der des Beispiels 1 einen Zeolith-Adsorber mit einer Einblasvorrichtung 16 und einem Gewebefilter 17 auf.

Die Zufuhrleitung 9 für frische Zeolithe, die Zufuhrleitung 11 für direkt zurückgeführte, beladene Zeolithe und die Zufuhrleitung 12 für aufgearbeitete Zeolithe ist an die Einblasvorrichtung 16 und die Abfuhrleitung 10 am Gewebefilter 17 angeschlossen. In diesem Beispiel zweigt von der Abfuhrleitung 10 eine Leitung 18 zum Abziehen von beladenen Zeolithen ab.

Das Gewebefilter 17 besteht aus 100 einzeln abreinigbaren Bereichen und ist mit einem Pulsreinigungssystem versehen. Das im Gewebefilter 17 eingesetzte Filtergewebe eignet sich zur Oberflächenfiltration.

Die Abgasleitung 15 verbindet die Vorrichtung 8 zur Aufarbeitung der Zeolithe mit dem Zeolith-Adsorber. Die Vorrichtung 8 weist ein indirekt beheizbares, mit einer Fördervorrichtung versehenes Rohr auf.

Im Betrieb werden pro Nm³ Abgas pulverförmige Zeolithe des Strukturtyps Faujasit mit Na⁺ als Kationen (Porenöffnung 0,74nm (7,4 Å)) mit einem Korndurchmesser von 1 bis 100 »m, insbesondere 5 bis 20 »m in der Einblasvorrichtung 16 in das Abgas eingeblasen, bevor das Abgas das Gewebefilter 17 mit einer Anströmgeschwindigkeit von 0,2 bis 1 m/min, insbesondere 0,5 bis 0,7 m/min, und mit einer Temperatur z.B. 130 ° durchströmt. Im Gewebefilter 17 findet zunächst eine Oberflächenfiltration der Zeolithe statt, bis sich eine Filterschicht gebildet hat. Die Schichtdicke wird durch ein Differenzdruckregelsystem auf einen Wert von 0,5 bis 2 mm eingestellt, indem die Bereiche des Gewebefilters 17 einzeln nacheinander jeweils bei Erreichen eines bestimmten Differenzdrucks durch das Gewebefilter 17 abgereinigt werden. Dabei wird pulsweise Reinigungsluft im Gegenstrom zugeführt. Der die Abreinigung auslösende Differenzdruck wird zwischen 15 und 30 mbar eingestellt.

Die Adsorption der PIC und, vermutlich, ihre zumindest teilweise Zerstörung beginnt beim Einblasen der Zeolithe in das Abgas und setzt sich bevorzugt in der Filterschicht im Gewebefilter 17 fort. Es findet einer Abscheidung von 99,5 % der toxischen PIC gemessen in TE-Einheiten statt.

Außerdem adsorbieren die Zeolithe restliche Salze und andere Produkte aus den vorangegangenen Reinigungsstufen, aber auch, wenn vorhanden, Quecksilber, HCl, HF, SO₂, insbesondere staubförmige und gasförmige Metalle.

Die folgende Tabelle zeigt an einem Beispiel das Adsorptionsvermögen undotierter Zeolithe für einige Metalle:

| Metall | Rohgas g/Nm³ | Reingas g/Nm³ |
|---|---|---|
| Hg | 32 | 8,4 |
| Cd | 32 | < 3 |
| Pb | 62 | 6,9 |
| Zn | 120 | 56 |
| Cu | 26 | 9,6 |

Bemerkenswert ist die gute Adsorption von Cadmium. Wird ein Teil der Zeolithe mit Silber datiert, d.h. Kationen durch Silberionen ausgetauscht, verbessert sich die Adsorption von Quecksilber durch Amalganbildung.

Die durch die Reinigungsluft gelösten beladenen Zeolithe werden gesammelt und in die Abfuhrleitung 10 geführt.

5 bis 50 % der beladenen Zeolithe werden durch die Leitung 18 abgezogen. Der Rest der beladenen Zeolithe wird in die Vorrichtung 8 zur Aufarbeitung der Zeolithe gefördert. Die Zeolithe werden ohne zusätzliches Gas indirekt auf 250 bis 500 °C erwärmt, wobei eine Desorption der Zeolithe und eine gleichzeitige Zersetzung der PIC stattfindet. Das Abgas der Vorrichtung 8 wird direkt in den Zeolith-Adsorber, und zwar in die Einblasvorrichtung 16, zurückgeleitet.

Die aufgearbeiteten Zeolithe werden durch die Zufuhrleitung 12 der Einblasvorrichtung 16 wieder zugeführt.

## Patentansprüche

1. Verfahren zur Reinigung von Abgas, bei dem zusätzlich zur Entfernung von Staub, HCl, HF, SO₂ und ggf. NOₓ Produkte unvollständiger Verbrennung (PIC), wie Dioxine, Furane und deren Vorläufer, durch Adsorptionsmittel entfernt werden, dadurch gekennzeichnet, daß als Adsorptionsmittel Zeolithe des Strukturtyps A eingesetzt werden.

2. Verfahren nach Anspruch 1, dadurch gekennzeichnet, daß Zeolithe mit Natriumionen (Na⁺) als Kationen eingesetzt werden.

3. Verfahren nach einem der Ansprüche 1 oder 2, dadurch gekennzeichnet, daß bei einem Teil der Zeolithe die Kationen durch Silberionen ausgetauscht sind.

4. Verfahren nach einem der Ansprüche 1 bis 3, dadurch gekennzeichnet, daß das Abgas durch eine Schicht aus konfigurierten Zeolithen mit einem Korndurchmesser von 1 bis 3 mm geleitet wird.

5. Verfahren nach einem der Ansprüche 1 bis 4, wobei das Abgas zunächst mit den Zeolithen vermischt und anschließend durch ein Gewebefilter mit einer Filterschicht geleitet wird, dadurch gekennzeichnet, daß dem Abgas pro m³ 30 bis 700 mg Zeolithe mit einem Korndurchmesser von 1 bis 100 »m, insbesondere 5 bis 20 »m, zugeführt wird.

6. Verfahren nach einem der Ansprüche 1 bis 5, dadurch gekennzeichnet, daS beladene Zeolithe zur Entfernung der PIC aufgearbeitet werden, wobei sie unter Luftabschluß auf eine Temperatur von 250 bis 500 °C erwärmt werden und ein Teil der aufgearbeiteten Zeolithe zurückgeführt wird.

7. Verfahren nach einem der Ansprüche 1 bis 6, dadurch gekennzeichnet, daß die Zeolithe bei der Aufarbeitung von einem sauerstoffarmen Gas, insbesondere Dampf oder einem Inertgas, durchströmt werden.

8. Verfahren nach einem der Ansprüche 1 bis 7, bei dem ggf. ein Teil der beladenen Zeolithe direkt zurückgeführt wird, dadurch gekennzeichnet, daß 20 bis 100 % der beladenen Zeolithe aufgearbeitet werden und der Rest der beladenen Zeolithe zurückgeführt wird.

9. Verfahren nach einem der Ansprüche 1 bis 8, dadurch gekennzeichnet, daß 5 bis 50 % der beladenen Zeolithe abgezogen werden.

10. Verfahren nach einem der Ansprüche 1 bis 9, dadurch gekennzeichnet, daß 5 bis 50 % der aufgearbeiteten Zeolithe abgezogen werden.

11. Verfahren nach einem der Ansprüche 1 bis 10, dadurch gekennzeichnet, daß das Abgas der Aufarbeitung in einen Feuerraum oder einen Abgaskanal (2) geleitet wird.

12. Verfahren nach einem der Ansprüche 1 bis 10, dadurch gekennzeichnet, daß das Abgas der Aufarbeitung zur Adsorption zurückgeleitet wird.

## Claims

1. A process for the purification of exhaust gases in which, in addition to the removal of dust, HCl, HF, SO₂ and, optionally, NOₓ, products of incomplete combustion (PIC) such as dioxins, furans, and the precursors thereof are removed using adsorbing agents, characterised in that zeolites of the structure type A are used as adsorbing agents.

2. A process according to Claim 1, characterised in that zeolites with sodium ions (Na⁺) are used as cations.

3. A process according to one of Claims 1 or 2, characterised in that in part of the zeolites the cations are replaced by silver ions.

4. A process according to any one of Claims 1 to 3, characterised in that the exhaust gases are directed through a layer of a configuration of zeolites with a grain size of from 1 to 3 mm.

5. A process according to any one of Claims 1 to 4, the exhaust gases being initially mixed with the zeolites and then being directed through a fabric filter with a filtering pad, characterised in that 30 to 700 mg of zeolites with a grain size of from 1 to 100 »m, in particular 5 to 20 »m are conveyed to the exhaust gases per m³.

6. A process according to any one of the Claims 1 to 5, characterised in that the charged zeolites for removing the PIC are processed, wherein they are heated to a temperature of 250 to 500 °C in the absence of air and part of the processed zeolites are returned.

7. A process according to any one of Claims 1 to 6, characterised in that during processing an oxygen-deficient gas, in particular steam or an inert gas, passes through the zeolites.

8. A process according to any one of Claims 1 to 7, in which, optionally, part of the charged zeolites are returned directly, characterised in that 20 to 100 % of the charged zeolites are processed and the remaining charged zeolites are returned.

9. A process according to any one of Claims 1 to 8, characterised in that 5 to 50 % of the charged zeolites are removed.

10. A process according to any one of Claims 1 to 9, characterised in that 5 to 50 % of the processed zeolites are removed.

11. A process according to any one of Claims 1 to 10, characterised in that the exhaust gases from processing are directed into a combustion chamber or an exhaust gas channel (2).

12. A process according to any one of Claims 1 to 10, characterised in that the exhaust gases from processing are directed back for adsorption.

## Revendications

1. Procédé de purification de gaz d'échappement, dans lequel, en supplément de l'élimination des poussières, de HCl, de HF, de SO₂ et éventuellement de NOₓ, on élimine des produits d'incomplète combustion (PIC), tels que des dioxines, des furannes et leurs précurseurs, par des produits d'adsorption, caractérisé en ce que, comme produits d'adsorption, on met en oeuvre des zéolites du type de structure A.

2. Procédé suivant la revendication 1, caractérisé en ce qu'on met en oeuvre des zéolites à ions sodium (Na⁺) comme cations.

3. Procédé suivant l'une des revendications 1 et 2, caractérisé en ce que les cations sont échangés par des ions d'argent pour une part des zéolites.

4. Procédé suivant l'une des revendications 1 à 3, caractérisé en ce que les gaz d'échappement sont conduits à travers une couche de zéolites configurées ayant un diamètre de grains de 1 à 3 mm.

5. Procédé suivant l'une des revendications 1 à 4, dans lequel les gaz d'échappement sont tout d'abord mélangés aux zéolites et sont ensuite conduits à travers un filtre en tissu présentant une couche filtrante, caractérisé en ce que, par mètre cube de gaz d'échappement, on amène 30 à 700 mg de zéolites ayant un diamètre de grains de 1 à 100 »m, en particulier de 5 à 20 »m.

6. Procédé suivant l'une des revendications 1 à 5, caractérisé en ce que des zéolites chargées sont traitées pour éliminer les PIC, les zéolites étant chauffées en l'absence d'air à une température de 250 à 500°C et une partie des zéolites traitées étant recyclée.

7. Procédé suivant l'une des revendications 1 à 6, caractérisé en ce que les zéolites sont, au cours du traitement, traversées par un gaz pauvre en oxygène, en particulier de la vapeur ou un gaz inerte.

8. Procédé suivant l'une des revendications 1 à 7, dans lequel éventuellement une partie des zéolites chargées est directement recyclée, caractérisé en ce que 20 à 100 % des zéolites chargées sont traités et en ce que le reste des zéolites chargées est recyclé.

9. Procédé suivant l'une des revendications 1 à 8, caractérisé en ce que 5 à 50 % des zéolites chargées sont soutirés.

10. Procédé suivant l'une des revendications 1 à 9, caractérisé en ce que 5 à 50 % des zéolites traitées sont soutirés.

11. Procédé suivant l'une des revendications 1 à 10, caractérisé en ce que les gaz d'échappement du traitement sont conduits dans un foyer ou un canal à gaz d'échappement (2).

12. Procédé suivant l'une des revendications 1 à 10, caractérisé en ce que les gaz d'échappement du traitement sont reconduits à l'adsorption.
